# EUROPÄISCHE PATENTSCHRIFT

(11) **EP 2 981 449 B1**
(45) Veröffentlichungstag und Bekanntmachung des Hinweises auf die Patenterteilung: **04.01.2017**
(21) Anmeldenummer: 13713928.3
(22) Anmeldetag: 04.04.2013
(51) Int. Cl.: B62D 25/20

(54) **MODULÄRER BODEN FÜR EIN NUTZFAHRZEUG UND VERFAHREN ZU SEINER HERSTELLUNG**
MODULAR FLOOR FOR A UTILITY VEHICLE AND METHOD FOR PRODUCING SAID MODULAR FLOOR
PLANCHER MODULAIRE POUR VÉHICULE UTILITAIRE ET SON PROCÉDÉ DE FABRICATION

(43) Veröffentlichungstag der Anmeldung: 10.02.2016
(73) Patentinhaber: Schmitz Cargobull AG, 48341 Altenberge (DE)
(72) Erfinder: SCHMITZ, Peter, 48341 Altenberge (DE); RATHMANN, Norbert, 48356 Nordwalde (DE); SCHÜTTE, Olaf, 59387 Ascheberg (DE); KÖTTER, Jürgen, 49545 Tecklenburg (DE); SCHOLZ, Volker, 48341 Altenberge (DE)
(74) Vertreter: Cohausz & Florack
(86) Internationale Anmeldenummer: PCT/EP2013/057141
(87) Internationale Veröffentlichungsnummer: WO 2014/161581

(56) Entgegenhaltungen:
- EP-A1- 0 823 368
- EP-A1- 1 245 476
- WO-A1-01/62576
- DE-U1- 29 606 451
- FR-A1- 2 914 242
- US-A- 3 420 192
- US-A- 4 318 549

## Beschreibung

Die Erfindung betrifft einen Boden für ein Nutzfahrzeug mit einer Decklage, an deren Oberseite eine Ladefläche vorhanden ist, auf der im Gebrauch zu transportierendes Gut steht. Der Boden weist eine Tragstruktur auf, die die Decklage trägt und aus mindestens einem in Längsrichtung des Bodens sich erstreckenden Längsträger und quer dazu ausgerichteten und längs des Längsträgers verteilt angeordneten Querträgern gebildet ist. Jeder Querträger ist aus Querträgerabschnitten zusammengesetzt, die an dem Längsträger abgestützt und fest mit ihm verbunden sind.

Darüber hinaus betrifft die Erfindung ein Verfahren zur Herstellung eines solchen Bodens.

Bei Nutzfahrzeugen der hier in Rede stehenden Art handelt es sich beispielsweise um Sattelauflieger für Sattelzüge, Anhänger für Lastkraftwagen und Lastkraftwagen selbst, die mit einer Ladefläche versehen sind. Solche Nutzfahrzeuge werden beispielsweise zum Transport von losen oder auf Paletten verpackten Gütern eingesetzt. Ihre Ladefläche ist dabei typischerweise von einer Bordwand umgeben. Zusätzlich oder alternativ kann ein Planenaufbau vorgesehen sein, um das auf der Ladefläche verstaute Transportgut gegenüber der Umgebung zu schützen.

Die Beladung der Ladefläche mit dem Transportgut erfolgt üblicherweise mit Palettentransportwagen oder selbstfahrenden Hubstaplern. Um die dabei auftretenden Belastungen aufnehmen zu können, muss der Boden, an dessen Oberseite die Ladefläche ausgebildet ist, eine ausreichende Belastbarkeit besitzen.

Gleichzeitig sollen sich Nutzfahrzeugböden der hier in Rede stehenden Art mit geringem Zeitaufwand herstellen lassen und bei hoher Tragfähigkeit ein minimiertes Eigengewicht aufweisen, um maximale Zuladungen und damit einhergehend eine optimale Transportkapazität zu erreichen.

Um diese Anforderungen zu erfüllen, werden Böden für Nutzfahrzeuge üblicherweise als separate Baugruppe gefertigt und auf ein ebenso vorgefertigtes Chassis des Nutzfahrzeug aufgesetzt.

Es sind unterschiedlichste Ansätze zur kosteneffizienten Herstellung von Nutzfahrzeugböden dieser Art bekannt. So ist beispielsweise in der GB 667 176 A vorgeschlagen worden, dem Boden für ein Nutzfahrzeug eine Tragstruktur zu verleihen, die aus Längsträgern und Querträgern besteht. Die L-förmigen Längsträger sind dabei parallel und mit Abstand zueinander ausgerichtet, während die Querträger in regelmäßigen Abständen in Längsrichtung der Längsträger verteilt angeordnet sind. Die einzelnen Querträger sind dazu in jeweils vier plattenartige Querträgerabschnitte unterteilt, von denen jeweils einer an der der jeweiligen Längsseite zugeordneten Außenseite der Längsträger und zwei zwischen den Längsträgern angeordnet sind. Die seitlich außen an den Längsträgern angeordneten Querträgerabschnitte stoßen dabei mit einem an ihrer einen Stirnseite abgekanteten Randbereich gegen den Steg des jeweils zugeordneten Längsträgers. Genauso stoßen die zwischen den Längsträgern angeordneten Querträgerabschnitte des jeweiligen Querträgers mit einem an ihrer einen Seite abgekanteten Randbereich gegen die innenliegende Seite des jeweils zugeordneten Längsträgers und sind dabei fluchtend zum jeweils außen angeordneten Querträgerabschnitt positioniert. Durch Nieten, die durch im jeweiligen Längsträger dazu vorgesehene Öffnungen geführt sind, werden die jeweils gegenüberliegend am jeweiligen Längsträger angeordneten Querträgerabschnitte fest miteinander verbunden. Ebenso sind die beiden jeweils zwischen den Längsträgern angeordneten und mit ihren einander zugeordneten Stirnseiten gegeneinander stoßenden Querträgerabschnitte des jeweiligen Querträgers mittels einer ebenfalls mit ihnen vernieteten Platte fest miteinander verbunden. Den Abschluss zur Oberseite der Tragstruktur bilden Querleisten, die sich über die gesamte Breite der Tragstruktur erstrecken und jeweils auf einen der Querträger aufgesetzt und mit ihm vernietet werden. Sämtliche Bauteile, die die Tragstruktur bilden sind dabei aus Stahlblech vorgefertigt.

Auf einem vergleichbaren Prinzip beruhende Böden für Nutzfahrzeuge sind aus der gattungsgemäßen EP 1 245 476 A1 und der WO 98/08725 A1 bekannt, wobei bei diesen Bodenkonstruktionen die zwischen den Längsträgern vorhandenen Querträgerabschnitte jeweils einteilig ausgebildet sind. Auf die so gebildete Tragstruktur ist dabei jeweils eine aus Holz bestehende Decklage gelegt, die von der Tragstruktur getragen wird und an deren freier Oberseite dann die Ladefläche des jeweiligen Nutzfahrzeugs vorhanden ist.

Vor dem Hintergrund des voranstehend erläuterten Standes der Technik bestand die Aufgabe der Erfindung darin, einen Boden für ein Nutzfahrzeug zu schaffen, der eine weiter vereinfachte, kosteneffiziente Herstellung bei unverändert hohem Gebrauchswert ermöglicht. Darüber hinaus sollte ein Verfahren zur Herstellung eines solchen Bodens vorgeschlagen werden.

Erfindungsgemäß ist diese Aufgabe in Bezug auf den Boden dadurch gelöst worden, dass ein solcher Boden die in Anspruch 1 angegebenen Merkmale aufweist.

Ein zur Herstellung eines solchen Bodens erfindungsgemäß vorgesehenes Verfahren ist in Anspruch 14 angegeben. Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Boden für ein Nutzfahrzeug weist in Übereinstimmung mit dem eingangs erläuterten Stand der Technik eine Decklage, an deren Oberseite eine Ladefläche vorhanden ist, auf der im Gebrauch zu transportierendes Gut steht, und eine die Decklage tragende Tragstruktur auf, die aus mindestens einem in Längsrichtung des Bodens sich erstreckenden Längsträger und quer dazu ausgerichteten und längs des Längsträgers verteilt angeordneten Querträgern gebildet ist, wobei die Querträger aus Querträgerabschnitten zusammengesetzt sind, die an dem Längsträger abgestützt sind, wobei der Boden aus mindestens zwei miteinander verbundenen Längssegmenten gebildet ist, von denen ein erstes seitliches Längssegment der einen Längsseite des Bodens und ein zweites seitliches Längssegment der anderen Längsseite des Bodens zugeordnet ist.

Ein erfindungsgemäßer Boden ist dadurch gekennzeichnet,
- dass jedes Längssegment jeweils ein aus einem Blechmaterial geformtes Decklagensegment und das jeweilige Decklagensegment tragende, in Längsrichtung beabstandet zueinander angeordnete und fest mit dem Decklagensegment verbundene Querträgerabschnitte aufweist, und
- dass die Decklage des Bodens aus den Decklagensegmenten zusammengesetzt ist.

Ein erfindungsgemäßer Boden ist somit in Längssegmente unterteilt, die sich jeweils über die Länge des Bodens erstrecken und so zusammengefügt sind, dass sie gemeinsam die Tragstruktur und die Decklage des Bodens bilden. Jedes Längssegment umfasst dabei ein Decklagensegment und mehrere Querträgerabschnitte, die fest mit dem Decklagensegment verbunden sind. Auf diese Weise stützen einerseits bei fertig montiertem erfindungsgemäßem Boden die Querträgerabschnitte das ihnen zugeordnete Decklagensegment. Andererseits sind die Querträgerabschnitte jedoch in Folge ihrer festen Ankopplung an das jeweilige Decklagensegment auch in ihrer Position relativ zueinander und zum Decklagensegment fixiert. Dies erlaubt es, die Längssegmente jeweils für sich vorzufertigen und anschließend zu dem erfindungsgemäßen Boden zusammenzufügen.

Das erfindungsgemäße Verfahren zum Herstellen eines erfindungsgemäß ausgebildeten Bodens umfasst dementsprechend folgende Arbeitsschritte:
a) Bereitstellen von mindestens zwei aus einem Blechmaterial geformten Decklagensegmenten, von Querträgerabschnitten und mindestens einem Längsträger;
b) Vorfertigen von mindestens zwei Längssegmenten, indem jedes Längssegment mindestens aus jeweils einem Decklagensegment und Querträgerabschnitten zusammengesetzt wird, indem die Querträgerabschnitte am jeweils zugeordneten Decklagensegment angeordnet und fest mit ihm verbunden werden;
c) Zusammenfügen der vorgefertigten Längssegmente und des mindestens einen Längsträgers derart, dass der Längsträger zwischen den Längssegmenten angeordnet ist und zwischen den aneinander liegenden Längssegmenten eine Fügezone ausgebildet ist;
d) Verbinden der Längssegmente und des Längsträgers in der Fügezone miteinander.

Der entscheidende Vorteil der erfindungsgemäßen Gestaltung eines Nutzfahrzeugbodens besteht somit darin, dass sie eine weitgehende separate Vorfertigung von Einzelsegmenten ermöglicht, die sich auf einfache Weise zum fertigen Produkt zusammensetzen lassen. Schon aufgrund ihrer sehr viel geringeren Abmessungen und der geringeren Teilezahl ist die Vorfertigung der einzelnen Längssegmente dabei deutlich einfacher als das im Stand der Technik übliche Zusammensetzen der gesamten Tragstruktur aus einer Vielzahl von Einzelbauteilen. Den Decklagensegmenten kommt dabei eine besondere Bedeutung zu. Sie bilden bei der Montage eine Schablone für die ordnungsgemäße Positionierung der Querträgerabschnitte und stellen während des Transports der Längsegmente zum Ort, an dem der Boden aus den Längssegmenten zusammengesetzt wird, sicher, dass die Querträger ihre ordnungsgemäße Position auch beibehalten.

Grundsätzlich ist es denkbar, einen erfindungsgemäßen Boden unter Verwendung eines einzelnen zentralen Längsträgers aufzubauen, von dem die Querträgerabschnitte der Querträger seitlich abstehen. Ein solcher Boden lässt sich aus zwei seitlichen Längssegmenten zusammensetzen, die jeweils einer der Längsseiten des Bodens zugeordnet sind und in einer in Längsrichtung des Bodens verlaufenden Fügezone aufeinander treffen, in der sie aneinander anliegen und miteinander fest verbunden sind.

Der mindestens eine bei einem erfindungsgemäßen Boden vorgesehene Längsträger kann unabhängig von den Längssegmenten am jeweiligen Montageort bereitgehalten werden, so dass die jeweils vorgefertigten Längssegmente an ihn seitlich angesetzt und dann mit ihm und miteinander verbunden werden. Um das Handling zu vereinfachen, kann es aus fertigungstechnischer Sicht jedoch zweckmäßiger sein, wenn mindestens eines der seitlichen Längssegmente einen der Längsträger umfasst. Der jeweilige Längsträger kann dann Bestandteil des jeweils vormontierten Längssegments sein und mit ihm zum Ort der Fertigmontage transportiert werden. Die Anzahl der Bauteile, die am Ort der Fertigmontage bereitgehalten und gehandhabt werden muss, ist so weiter reduziert. Darüber hinaus trägt der jeweilige Längsträger zur Aussteifung des mit ihm ausgestatteten Längssegments bei, wodurch der Transport und das Handling dieses Längssegments weiter vereinfacht werden.

Als besonders vorteilhaft erweist sich dies, wenn bei einem erfindungsgemäßen Boden mindestens zwei beabstandet zueinander angeordnete Längsträger und mindestens ein mittleres Längssegment vorgesehen sind, das zwischen den den Längsseiten des Bodens zugeordneten seitlichen Längssegmenten angeordnet ist und die benachbart zueinander angeordneten Längsträger miteinander verbindet, wobei das mittlere Längssegment ebenfalls ein Decklagensegment, das ebenfalls einen Abschnitt der Decklage bildet, sowie in Längsrichtung des mittleren Längssegments beabstandet angeordnete Querträgerabschnitte aufweist, die fest mit dem Decklagensegment des mittleren Längssegments verbunden sind und das Decklagensegment des mittleren Längssegments tragen. Ein derart gestalteter Boden kann höhere Lasten aufnehmen und leitet die jeweils zu transportierende Last gleichmäßiger in das Chassis des jeweiligen Nutzfahrzeugs ab. Dabei ist es selbstverständlich möglich, mehr als zwei Längsträger vorzusehen, wobei auch in diesem Fall zwischen zwei benachbarten Längsträgern jeweils ein vormontierbares Längssegment vorgesehen ist, das aus einem Decklagensegment und das Decklagensegment tragenden und fest mit ihm verbundenen Querträgerabschnitten gebildet ist.

Im Fall, dass mindestens eins der Längssegmente einen Längsträger umfasst und der Längsträger jeweils einen dem Decklagensegment dieses Längssegments zugeordneten Obergurt und einen den Obergurt tragenden Steg aufweist, kann eine besonders formsteife und gleichzeitig fertigungstechnisch einfach zu realisierende Anbindung des Decklagensegments an den Längsträger dadurch realisiert werden, dass das Decklagensegment auf dem Obergurt liegt. Das jeweilige Decklagensegment kann dabei einen zusätzlichen Beitrag zur Aussteifung des Längssegments leisten, wenn das auf dem Obergurt liegende Decklagensegment einen Schenkel aufweist, der in Richtung des vom Obergurt abgewandten unteren Rands des Stegs weist. Diese Ausgestaltung erweist sich insbesondere dann als sinnvoll, wenn der Obergurt des Längsträgers in seinem Randbereich ebenfalls eine nach unten gerichtete Abkantung aufweist, an der der nach unten weisende Schenkel der Decklage dicht anliegt. Sind bei dem erfindungsgemäßen Boden zwei oder mehr Längsträger mit dazwischen liegenden mittleren Längssegmenten vorgesehen, so lässt sich der Anschluss zwischen dem jeweiligen mittleren Längssegment und dem jeweils angrenzenden seitlichen Längssegment auf praxisgerechte, einfach montierbare Weise dadurch herstellen, dass der Schenkel des auf dem Obergurt liegenden Decklagensegments an der dem jeweiligen mittleren Längssegment zugeordneten Seite des Stegs oder des Obergurts anliegt und das jeweilige mittlere Längssegment mindestens mit seinem Decklagensegment gegen den Schenkel des Decklagensegments des jeweiligen seitlichen Längssegments stößt. Optimaler Weise ist zu diesem Zweck auch an dem Decklagensegment des mittleren Längssegments ein nach unten weisender Schenkel ausgebildet, der flächig an dem korrespondierend geformten Schenkel des jeweiligen seitlichen Längssegments anliegt.

Grundsätzlich ist es denkbar, die Querträgerabschnitte eines Querträgers in Längsrichtung der Längsträger versetzt zueinander anzuordnen. Jedoch lässt sich eine einfache und besonders effektiv herzustellende Verbindung zwischen den Querträgerabschnitten dadurch ermöglichen, dass bei zwei Längssegmenten, von denen eines auf der einen und das andere auf der anderen Längsseite des jeweils zugeordneten Längsträgers angeordnet ist, jedem Querträgerabschnitt des einen Längssegments ein Querträgerabschnitt des anderen Längssegments zugeordnet ist und die einander zugeordneten Querträgerabschnitte gegenüberliegend zueinander mittels mindestens eines gemeinsamen Verbindungselements mit dem Längsträger verbunden sind.

Die Formsteifigkeit der bei einem erfindungsgemäßen Boden vorgesehenen Decklagensegmente lässt sich dadurch weiter verbessern, dass in die Decklagensegmente der Längssegmente jeweils mindestens eine sich in Längsrichtung des jeweiligen Längssegments erstreckende Sicke eingeformt ist. Indem zudem die feste Verbindung zwischen den Decklagensegmenten und den Querträgern, die das Decklagensegment des jeweiligen Längssegments tragen, in den Sicken ausgebildet ist, wird vermieden, dass die für die Anbindung des jeweiligen Decklagensegments an die zugeordneten Querträger benötigten Befestigungselemente über die Ladefläche hinaus stehen und das zu transportierende Gut beschädigen oder selbst beim Beladen zerstört werden.

Um auch im Bereich der Längs- oder stirnseitigen Schmalseiten des Bodens eine hohe Formstabilität der Decklagen zu gewährleisten, können die Decklagensegmente der seitlichen Längssegmente an ihrer der jeweiligen Längsseite des Bodens zugeordneten Außenseite jeweils eine von der an der Oberseite der Decklagensegmente gebildeten Ladefläche weg nach unten weisende Abkröpfung aufweisen. Die Abkröpfung bildet dabei eine seitliche Abschlussleiste, die nicht nur einen optisch einwandfreien seitlichen Abschluss des Bodens gewährleistet, sondern darüber hinaus auch zum Befestigen von Anbauteilen oder zum Anschlagen von Zurrmitteln genutzt werden kann.

Um im Fall, dass die Decklagensegmente an ihren Längsseiten mit einer Abkröpfung der voranstehend erläuterten Art versehen sind, auch im front- oder rückwärtigen Stirnbereich des Bodens einen optisch einwandfreien und gleichzeitig die Steifigkeit des Bodens unterstützenden Abschluss zu bewerkstelligen, kann an den Stirnseiten des Bodens jeweils ein den stirnseitigen Abschluss des Bodens bildender Streifenabschnitt vorgesehen sein, wobei zur Abstützung und Verbindung dieses Streifenabschnitts mit der jeweils angrenzenden Abkröpfung der Streifenabschnitt an dieser Abkröpfung mittels einer Eckverstärkung abgestützt sein kann, die in den Eckbereich gesetzt ist, der von dem jeweiligen Streifenabschnitt und der an ihn angrenzenden Abkröpfung begrenzt ist.

Der besondere Vorteil eines erfindungsgemäßen Bodens besteht darin, dass sämtliche der hier erwähnten Bauteile, aus denen seine Längssegmente zusammengesetzt sind, aus einem Blechmaterial bestehen können, das sich auf einfache Weise zu dem jeweiligen Bauteil formen lässt. Besonders preisgünstig bei gleichzeitig hoher Festigkeit und optimiertem Gebrauchswert lässt sich dies dann bewerkstelligen, wenn die betreffenden Blechmaterialien aus Stahl bestehen. In diesem Fall bestehen dann mindestens die Decklagensegmente, die Querträgerabschnitte und die Längsträger der Längssegmente eines erfindungsgemäßen Bodens aus einem Stahlwerkstoff.

Grundsätzlich ist es denkbar, die erfindungsgemäß jeweils zu einem Längssegment zusammengesetzten Bauteile "Querträger" und "Decklagensegment" sowie optional "Längsträger" in jeder geeigneten Weise miteinander zu verbinden. Dies schließt die Möglichkeit des Verklebens oder Verschweißens ein. Jedoch ergibt sich eine besonders einfache Montage dann, wenn mindestens die Verbindungen zwischen den Decklagensegmenten und den ihnen jeweils zugeordneten Querträgerabschnitten und Längsträgern sowie die Verbindungen der Querträgerabschnitte miteinander und mit den jeweils zugeordneten Längsträgern jeweils ausschließlich als Schraubverbindung oder als kaltgefügte Verbindung ausgeführt sind. Eine Verschraubung der wesentlichen Bauteile der Längssegmente eines erfindungsgemäßen Bodens macht es besonders einfach, einzelne Bauteile zu Reparaturzwecken zu ersetzen. Kaltgefügte Verbindungen, wie beispielsweise durch Durchsetzfügen, auch Clinchen oder Druckfügen genannt, oder Vernieten erzeugte Verbindungen eignen sich aufgrund ihrer technologischen Vorteile besonders gut für die großtechnische Serienfertigung von Nutzfahrzeugböden der hier in Rede stehenden Art.

Nachfolgend wird die Erfindung anhand einer ein Ausführungsbeispiel darstellenden Zeichnung näher erläutert. Es zeigen jeweils schematisch:

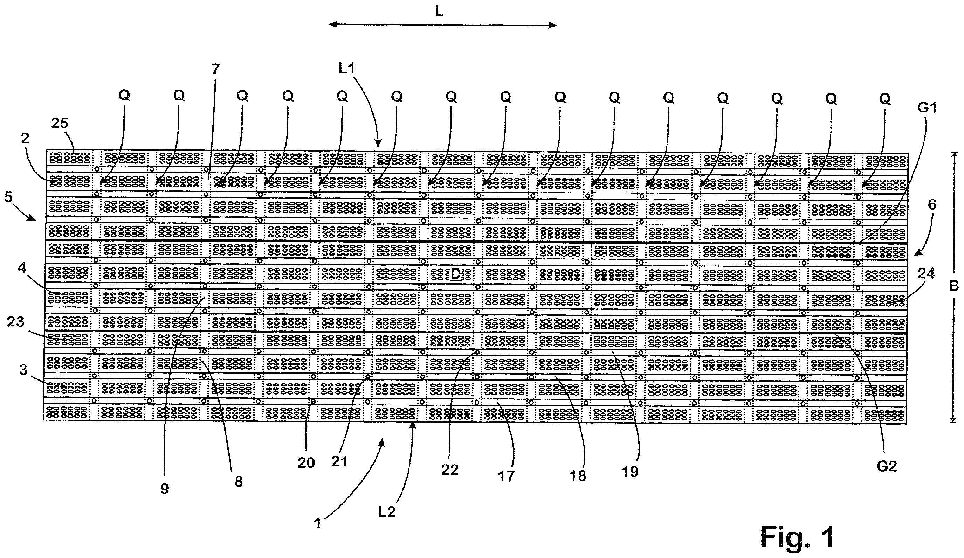

- Fig. 1: einen Boden für ein Nutzfahrzeug in einer Ansicht von oben;

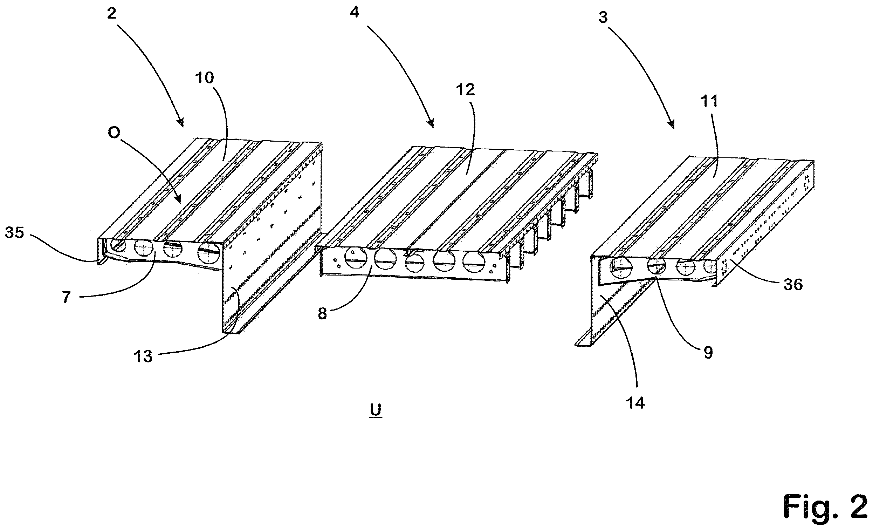

- Fig. 2: die Abschnitte von Längssegmenten des Bodens gemäß Fig. 1 in einer perspektivischen Ansicht von oben;

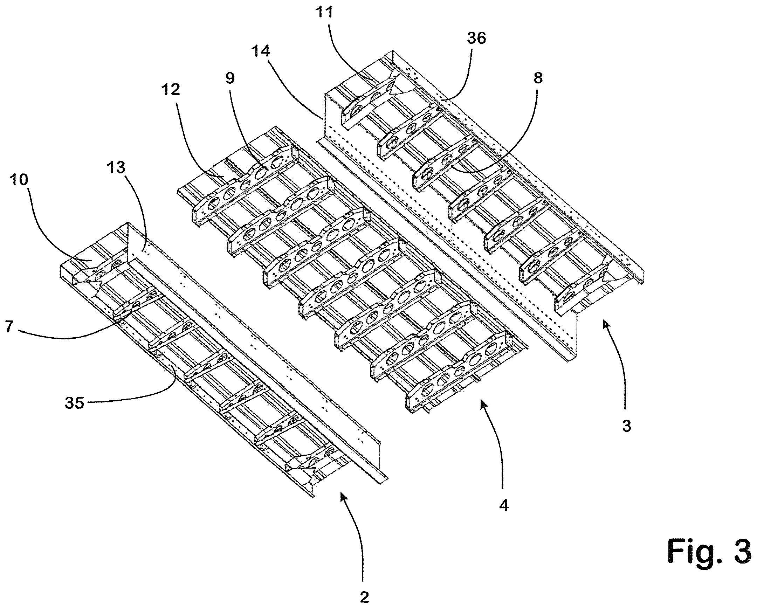

- Fig. 3: die Abschnitte gemäß Fig. 2 in einer perspektivischen Ansicht von unten;

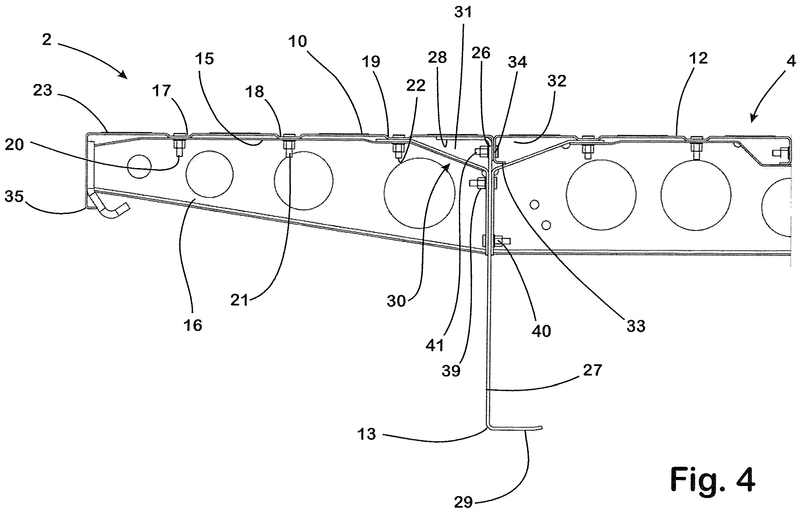

- Fig. 4: einen Ausschnitt des Bodens in einer frontalen Ansicht;

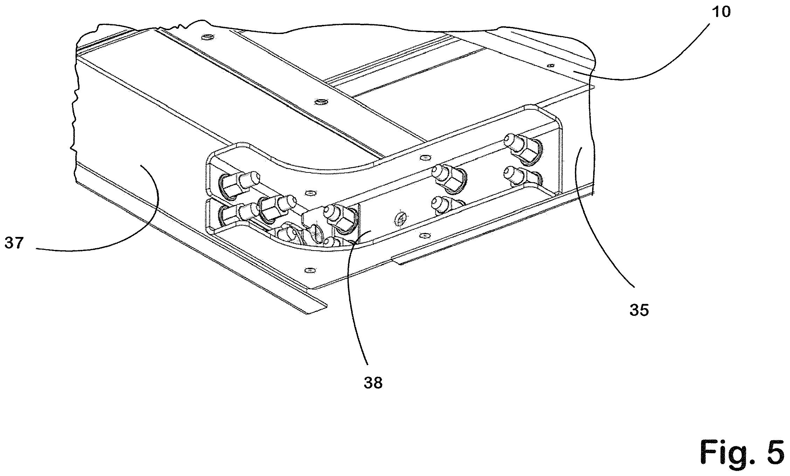

- Fig. 5: einen Eckbereich des Bodens in einer perspektivischen Ansicht von unten;

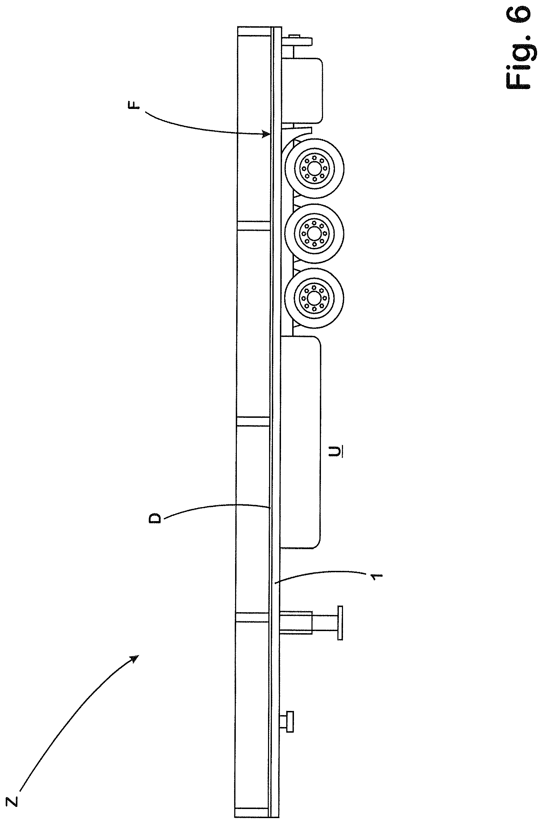

- Fig. 6: ein Nutzfahrzeug in seitlicher Ansicht.

Der Boden 1 für ein Nutzfahrzeug Z, bei dem es sich vorliegend um einen Sattelauflieger, auch "Trailer" genannt, für einen Sattelzug handelt, ist aus drei Längssegmenten 2,3,4 zusammengesetzt. Von den drei Längssegmenten 2,3,4 ist das erste seitliche Längssegment 2 der ersten Längsseite L1 und das zweite seitliche Längssegment 3 der zweiten Längsseite L2 zugeordnet. Zwischen den seitlichen Längssegmenten 2,3 ist das mittlere Längssegment 4 des Bodens 1 angeordnet. Die Längssegmente 2,3,4 erstrecken sich jeweils in Längsrichtung L über die gesamte Länge des Bodens 1 und enden jeweils an einer rückwärtigen Stirnseite 5 und einer fronseitigen Stirnseite 6, die bei Gebrauch des Nutzfahrzeugs Z einer hier nicht dargestellten Zugmaschine zugeordnet ist.

Jedes Längssegment 2,3,4 umfasst eine Vielzahl von Querträgerabschnitten 7,8,9 und jeweils ein Decklagensegment 10,11,12. Zu den seitlichen Längssegmenten 2,3 gehört darüber hinaus jeweils noch ein Längsträger 13,14. Jeder der Querträgerabschnitte 7,8,9, jedes der Decklagensegmente 10,11,12 und jeder der Längsträger 13,14 ist aus einem Blechmaterial geformt.

Die Querträgerabschnitte 7,8,9 sind jeweils in gleichmäßigen Abständen über die Länge des Bodens verteilt und quer zur Längsrichtung L ausgerichtet an der Unterseite des jeweils zugeordneten Decklagensegments 10,11,12 befestigt. Dazu weisen die Querträgerabschnitte 7,8,9 einen Obergurt 15 und einen den Obergurt 15 stützenden Steg 16 auf, so dass sie einen T-förmigen Querschnitt besitzen. In den Steg 16 können zur Gewichtsersparnis Öffnungen eingeformt sein. Das jeweils zugeordnete Decklagensegment 10,11,12 liegt auf dem Obergurt 15 des jeweiligen Querträgerabschnitts 7,8,9.

In die Decklagensegmente 10,11,12 sind zur Aussteifung jeweils Sicken 17,18,19 eingeformt, die sich über die gesamte Länge der Längssegmente 2,3,4 erstrecken. Jeweils im Abstand der Querträgerabschnitte 10,11,12 sind in den Sicken 17,18,19 Löcher vorgesehen, durch die jeweils eine Schraube 20,21,22 gesteckt ist. Die Höhe des in den Sicken 17,18,19 sitzenden Schraubenkopfs der Schrauben 20,21,22 ist so an die Tiefe der Sicken 17,18,19 angepasst, dass der Schraubenkopf unterhalb des Niveaus der an der Oberseite O der Decklagensegmente 10,11,12 ausgebildeten Ladefläche F endet. Mit ihrem Schraubenschaft ist die jeweilige Schraube 20,21,22 durch eine korrespondierend angeordnete Durchgangsöffnung im Obergurt 15 des jeweiligen Querträgerabschnitts 7,8,9 gesteckt und mittels einer Mutter gegen den betreffenden Obergurt 15 verspannt.

Zusätzlich sind zur Verbesserung der Griffigkeit der Ladefläche F an den zwischen den jeweiligen Querträgerabschnitten 7,8,9 vorhandenen Längenabschnitten der Decklagensegmente 10,11,12 in regelmäßigen Abständen Noppen 23,24,25 ausgebildet, die in Richtung der Oberseite O vorstehen, so dass sie einen guten Widerhalt für einen Schuh oder ein Rad bilden. Alternativ ist es auch denkbar, anstelle der Noppen 23,24,25 Öffnungen in die Querträgerabschnitte 7,8,9 einzuformen, deren Randbereiche in an sich bekannter Weise nach oben gebogen sind, so dass die Öffnungen durch schmale Grate umgrenzt sind, an denen eine Schuhsohle oder ein Reifen beim Begehen oder Befahren ausreichenden Widerhalt findet.

An ihren einander zugewandten Längsseiten weisen die Decklagensegmente 10,11,12 der Längssegmente 2,3,4 jeweils einen nach unten, d.h. zur Unterseite U des Nutzfahrzeugs Z abgewinkelten Schenkel 26 auf, dessen Höhe kleiner ist als die Höhe der jeweiligen Querträgerabschnitte 7,8,9. Bei den seitlichen Längssegmenten 2,3 liegen die Schenkel 26 jeweils an der dem mittleren Längssegment 4 zugeordneten Längsseite des Stegs 27 des dem betreffenden seitlichen Längssegment 2,3 jeweils zugeordneten Längsträgers 13,14 an.

Die Längsträger 13,14 haben einen Z-förmigen Querschnitt mit einem von ihrem Steg 27 in Richtung der jeweiligen Längsseite L1,L2 abstehenden Obergurt 28 und einem in Richtung des jeweils anderen Längsträger 14,13 vom Steg 27 abstehenden Untergurt 29. Das den seitlichen Längssegmenten 2,3 jeweils zugeordnete Decklagensegment 10,11 liegt jeweils auf dem Obergurt 28 des jeweils zugeordneten Längsträgers 13,14.

Im dem jeweiligen Längsträger 13,14 zugeordneten Endabschnitt verläuft der Obergurt 15 der Querträgerabschnitte 7,8,9 in Richtung des dem jeweiligen Längsträger 13,14 zugeordneten Endes 30 der Querträgerabschnitte 7,8,9 jeweils schräg abfallend, so dass bei an das jeweilige Decklagensegment 10,11,12 angesetzten Querträgerabschnitten 7,8,9 im Bereich des betreffenden Endabschnitts eine dreiecksförmige Öffnung 31,32 ausgebildet ist, die unten durch den betreffenden Obergurt 15 und oben durch das jeweilige Decklagensegment 10,11,12 begrenzt ist. Durch die Öffnung 31 ist bei den seitlichen Längssegmenten 2,3 ein Raum geschaffen, in den der Obergurt 28 des jeweiligen Längsträgers 13,14 ragt, ohne gegen den jeweiligen Querträgerabschnitt 7,8 zu stoßen. Beim mittleren Längssegment 4 nimmt die Öffnung 32 dagegen eine in diese Öffnung 32 vorstehende Abkröpfung 33 auf, die zur Aussteifung vom entsprechend dem Schenkel 28 geformten jeweiligen Schenkel 34 des dem mittleren Längssegments 4 zugeordneten Decklagensegments 12 absteht.

Der Obergurt 15 der Querträgerabschnitte 7,8,9 ist an der dem jeweiligen Längsträger 13,14 zugeordneten Stirnseite der Querträgerabschnitte 7,8,9 fortgesetzt, so dass an dem dort vorgesehenen Abschnitt des Obergurts 15 eine Anlagefläche ausgebildet ist, mit der der jeweilige Querträgerabschnitt 7,8,9 flächig an der ihm zugeordneten Seite des Stegs 27 des jeweiligen Längsträgers 13,14 anliegt.

Die Querträgerabschnitte 7,8,9 der Längssegmente 10,11,12 sind so angeordnet, dass fluchtend zu jedem Querträgerabschnitt 7 des ersten seitlichen Längssegments 2 ein Querträgerabschnitt 8 des mittleren Längssegments 4 und fluchtend zu jedem Querträgerabschnitt 9 des mittleren Längssegments 4 genauso ein Querträgerabschnitt 8 des zweiten seitlichen Längssegments 3 zugeordnet ist. Auf diese Weise bilden die jeweils in Flucht zueinander angeordneten Querträgerabschnitte 7,8,9 jeweils einen Querträger Q, der quer zu den Längsträgern 13,14 ausgerichtet ist und sich über die Breite B des Bodens 1 erstreckt.

An ihrem der jeweiligen Längsseite L1,L2 zugeordneten Längsrand weisen die Decklagensegmente 10,11 der seitlichen Längssegmente 2,3 jeweils eine nach unten weisende Abkröpfung 35,36 auf, deren Höhe größer ist als die Höhe der Querträgerabschnitte 7,8 der seitlichen Längssegmente 2,3 im Bereich ihres der jeweiligen Längsseite L1,L2 zugeordneten Endes. Auf diese Weise steifen die Abkröpfungen 35,36 nicht nur das jeweilige Decklagensegment 10,11 aus, sondern bilden auch einen optisch einwandfreien seitlichen Abschluss des Bodens 1.

Stirnseitig ist jeweils ein Abschlussstreifen 37 vorgesehen, der sich über die Breite B des Bodens erstreckt. Der Anschluss des Abschlussstreifens 37 an die seitlichen Abkröpfungen 35,36 erfolgt jeweils über Eckverstärker 38, die in den Eckbereich gesetzt sind, an dem sich die jeweilige seitliche Abkröpfung 35,36 und der Abschlussstreifen 37 treffen. Durch Verschraubungen ist der jeweilige Eckverstärker 38 mit der zugeordneten Abkröpfung 35,36 und dem Abschlussstreifen 37 fest verbunden.

Zur Montage des Bodens 1 werden zunächst die seitlichen Längssegmente 2,3 aus der erforderlichen Zahl von Querträgerabschnitten 7,8 und jeweils einem Längsträger 13,14 vormontiert. Dazu werden die jeweiligen Querträgerabschnitte 7,8 in der beschriebenen Weise mittels der Schrauben 20,21,22 mit dem jeweils zugeordneten Decklagensegment 10,11 verschraubt und der zugeordnete Längsträger 13,14 so an das jeweilige Decklagensegment 10,11 angesetzt, dass das Decklagensegment 10,11 auf dem Obergurt 28 des Längsträgers 13,14 liegt und mit seinem Schenkel 26 an der dem mittleren Längssegment zugeordneten Seite des jeweiligen Längsträgers 13,14 anliegt.

Genauso wird aus dem Decklagensegment 12 und einer entsprechenden Anzahl von Querträgerabschnitten 9 das mittlere Längssegment 4 vormontiert.

Anschließend werden die vormontierten Längssegmente 2,3,4 zusammengefügt, so dass das erste Längssegment 2 in einer Fügezone G1 mit seiner Längsseite an der zugeordneten Längsseite des mittleren Längssegments 4 und das zweite seitliche Längssegment 3 in gleicher Weise mit seiner dem mittleren Längssegment 4 zugeordneten Längsseite in einer Fügezone G2 an dem mittleren Längssegment 4 anliegt. Die Längssegmente 2,3,4 werden dabei so angeordnet, dass ihre Stirnseiten bündig zueinander ausgerichtet sind. In dieser Stellung sind Durchgangsöffnungen, die in Abschnitte der Obergurte 15, die an den Seiten der Längsträger 13,14 anliegen, eingeformt sind, fluchtend zu korrespondierenden Durchgangsöffnungen ausgerichtet, die im Steg 27 des jeweiligen Längsträgers 13,14 vorhanden sind. Mittels durch die zueinander fluchtenden Öffnungen gesteckter Schrauben 39,40 werden die zueinander jeweils benachbart angeordneten Längssegmente 2,3,4 miteinander fest verbunden.

In vergleichbarer Weise erfolgt eine zusätzliche Verschraubung im Bereich der aneinander anliegenden Schenkel 26 der Decklagensegmente 10,11,12. Auch in diese Schenkel 26 sind Öffnungen eingebracht, die zueinander und mit korrespondierenden Öffnungen im Steg 27 des jeweiligen Längsträgers 13,14 fluchten und durch die ebenfalls Schrauben 41 geführt werden.

Der so erhaltene Boden 1 weist eine durch die Decklagensegmente 10,11,12 gebildete Decklage D auf, an deren Oberseite O die Ladefläche F für ein zu transportierendes, hier nicht gezeigtes Gut vorhanden ist.

### BEZUGSZEICHEN

- 1: Boden für das Nutzfahrzeug
- 2: der ersten Längsseite L1 zugeordnetes erstes seitliches Längssegment des Bodens 1
- 3: der zweiten Längsseite L2 zugeordnetes zweites seitliches Längssegment des Bodens 1
- 4: mittleres Längssegment des Bodens 1
- 5: rückwärtige Stirnseite des Bodens 1
- 6: fronseitige Stirnseite des Bodens 1
- 7, 8, 9: Querträgerabschnitte der Längssegmente 2,3,4
- 10, 11, 12: Decklagensegmente der Längssegmente 2,3,4
- 13, 14: Längsträger
- 15: Obergurt der Querträgerabschnitte 7,8,9
- 16: Steg der Querträgerabschnitte 7,8,9
- 17, 18, 19: Sicken der Decklagensegmente 10,11,12
- 20, 21, 22: Schrauben
- 23, 24, 25: Noppen der Decklagensegmente 10,11,12
- 26: Schenkel der Decklagensegmente 10,11,12
- 27: Steg des jeweiligen Längsträgers 13,14
- 28: Obergurt des jeweiligen Längsträgers 13,14
- 29: Untergurt des jeweiligen Längsträgers 13,14
- 30: dem jeweiligen Längsträger 13,14 zugeordnetes Ende der Querträgerabschnitte 7,8,9
- 31, 32: Öffnungen
- 33: Abkröpfung des Schenkels 34 des Decklagensegments 12
- 34: Schenkel des Decklagensegments 12
- 35, 36: seitliche Abkröpfung der Decklagensegmente 10,11
- 37: Abschlussstreifen
- 38: Eckverstärker
- 39, 40, 41: Schrauben
- B: Breite des Bodens 1
- D: Decklage
- F: Ladefläche
- G1, G2: Fügezonen
- L: Längsrichtung des Bodens 1
- L1: Längsseite des Bodens 1
- L2: Längsseite des Bodens 1
- O: Oberseite der Decklagensegmente 10,11,12
- Q: Querträger
- U: Unterseite des Nutzfahrzeugs Z
- Z: Nutzfahrzeug

## Patentansprüche

1. Boden für ein Nutzfahrzeug (Z), mit einer Decklage (D), an deren Oberseite (O) eine Ladefläche (F) vorhanden ist, auf der im Gebrauch zu transportierendes Gut steht, und mit einer die Decklage (D) tragenden Tragstruktur, die aus mindestens einem in Längsrichtung (L) des Bodens (1) sich erstreckenden Längsträger (13,14) und quer dazu ausgerichteten und längs des Längsträgers (13,14) verteilt angeordneten Querträgern (Q) gebildet ist, wobei die Querträger (Q) aus Querträgerabschnitten (7,8,9) zusammengesetzt sind, die an dem Längsträger (13,14) abgestützt sind, wobei der Boden (1) aus mindestens zwei miteinander verbundenen Längssegmenten (2,3,4) gebildet ist, von denen ein erstes seitliches Längssegment (2) der einen Längsseite (L1) des Bodens (1) und ein zweites seitliches Längssegment (3) der anderen Längsseite (12) des Bodens (1) zugeordnet ist, **dadurch gekennzeichnet,**
- **dass** jedes Längssegment (2,3,4) jeweils ein aus einem Blechmaterial geformtes Decklagensegment (10,11,12) und das jeweilige Decklagensegment (10,11,12) tragende, in Längsrichtung (L) beabstandet zueinander angeordnete und fest mit dem Decklagensegment (10,11,12) verbundene Querträgerabschnitte (7,8,9) aufweist, und
- **dass** die Decklage (D) des Bodens (1) aus den Decklagensegmenten (10,11,12) zusammengesetzt ist.

2. Boden nach Anspruch 1, **dadurch**
**gekennzeichnet, dass** er mindestens zwei beabstandet zueinander angeordnete Längsträger (13,14) und mindestens ein mittleres Längssegment (4) aufweist, das zwischen den den Längsseiten (L1,L2) des Bodens (1) zugeordneten seitlichen Längssegmenten (2,3) angeordnet ist und die benachbart zueinander angeordneten Längsträger (13,14) miteinander verbindet, und **dass** das mittlere Längssegment (4) ebenfalls ein Decklagensegment (12), das ebenfalls einen Abschnitt der Decklage (D) bildet, sowie in Längsrichtung (L) des mittleren Längssegments (4) beabstandet angeordnete Querträgerabschnitte (9) aufweist, die fest mit dem Decklagensegment (12) des mittleren Längssegments (4) verbunden sind und das Decklagensegment (4) des mittleren Längssegments tragen.

3. Boden nach einem der voranstehenden Ansprüche,
**dadurch gekennzeichnet, dass** mindestens eines der seitlichen Längssegmente (2,3) einen der Längsträger (13,14) umfasst.

4. Boden nach Anspruch 3, **dadurch**
**gekennzeichnet, dass** der Längsträger (13,14) des den Längsträger (13,14) umfassenden Längssegments (2,3) jeweils einen dem Decklagensegment (10,11) dieses Längssegments (2,3) zugeordneten Obergurt (28) und einen den Obergurt (28) tragenden Steg (27) aufweist, und **dass** das Decklagensegment (10,11) auf dem Obergurt (28) liegt.

5. Boden nach Anspruch 4, **dadurch**
**gekennzeichnet, dass** das auf dem Obergurt (28) liegende Decklagensegment (10,11) einen Schenkel (26) aufweist, der in Richtung des vom Obergurt (28) abgewandten unteren Rands des Stegs (27) weist.

6. Boden nach Anspruch 2 und 5, **dadurch**
**gekennzeichnet, dass** der Schenkel (26) des auf dem Obergurt (28) liegenden Decklagensegments (10,11) an der dem jeweiligen mittleren Längssegment (4) zugeordneten Seite des Stegs (27) oder des Obergurts (28) des jeweiligen Längsträgers (13,14) anliegt und **dass** das jeweilige mittlere Längssegment (4) mindestens mit seinem Decklagensegment (12) gegen den Schenkel (26) des Decklagensegments (10,11) des jeweiligen seitlichen Längssegments (2,3) stößt.

7. Boden nach einem der voranstehenden Ansprüche,
**dadurch gekennzeichnet, dass** bei zwei Längssegmenten (2,3,4), von denen eines auf der einen und das andere auf der anderen Längsseite des jeweils zugeordneten Längsträgers (13,14) angeordnet ist, jedem Querträgerabschnitt (7,8,9) des einen Längssegment (2,3,4) ein Querträgerabschnitt (7,8,9) des anderen Längssegments (2,3,4) zugeordnet ist und **dass** die einander zugeordneten Querträgerabschnitte (7,8,9) gegenüberliegend zueinander mittels mindestens eines gemeinsamen Verbindungselements mit dem Längsträger (13,14) verbunden sind.

8. Boden nach einem der voranstehenden Ansprüche,
**dadurch gekennzeichnet, dass** in die Decklagensegmente (10,11,12) der Längssegmente (2,3,4) jeweils mindestens eine sich in Längsrichtung (L) des jeweiligen Längssegments (2,3,4) erstreckende Sicke (17,18,19) eingeformt ist und dass die feste Verbindung zwischen den Decklagensegmenten (10,11,12) und den Querträgern (7,8,9), die das Decklagensegment (10,11,12) des jeweiligen Längssegments (2,3,4) tragen, in den Sicken (17,18,19) ausgebildet ist.

9. Boden nach einem der voranstehenden Ansprüche,
**dadurch gekennzeichnet, dass** die Decklagensegmente (10,11) der seitlichen Längssegmente (2,3) an ihrer der jeweiligen Längsseite (L1,L1) des Bodens (1) zugeordneten Außenseite jeweils eine von der an der Oberseite (O) der Decklagensegmente (10,11) gebildeten Ladefläche (F) weg nach unten weisende Abkröpfung (35,36) aufweisen.

10. Boden nach Anspruch 9, **dadurch**
**gekennzeichnet, dass** an seinen Stirnseiten (5,6) jeweils ein den stirnseitigen Abschluss des Bodens (1) bildender Streifenabschnitt (37) vorgesehen ist und **dass** der Streifenabschnitt (37) an der zugeordneten Abkröpfung (35,36) mittels einer Eckverstärkung (38) abgestützt ist, die in den Eckbereich gesetzt ist, der von dem jeweiligen Streifenabschnitt (37) und der an ihn angrenzenden Abkröpfung (33,36) begrenzt ist.

11. Boden nach einem der voranstehenden Ansprüche,
**dadurch gekennzeichnet, dass** mindestens die Decklagensegmente (10,11,12), die Querträgerabschnitte (7,8,9) und die Längsträger (13,14) der Längssegmente (2,3,4) aus einem Metallwerkstoff bestehen.

12. Boden nach einem der voranstehenden Ansprüche,
**dadurch gekennzeichnet, dass** die Verbindungen zwischen den Decklagensegmenten (10,11,12) und den ihnen jeweils zugeordneten Querträgerabschnitten (7,8,9) und Längsträgern (13,14) sowie die Verbindungen der Querträgerabschnitte (7,8,9) miteinander und mit den jeweils zugeordneten Längsträgern (13,14) jeweils ausschließlich als Schraubverbindungen oder als kaltgefügte Verbindungen ausgeführt sind.

13. Boden nach einem der voranstehenden Ansprüche,
**dadurch gekennzeichnet, dass** die Längssegmente (2,3,4) separat voneinander vorgefertigt und nach der Vorfertigung miteinander verbunden sind, so dass zwischen benachbart angeordneten Längssegmenten (2,3,4) jeweils eine Fügezone (G1,G2) ausgebildet ist, in der die Längssegmente (2,3,4) fest miteinander verbunden sind.

14. Verfahren zum Herstellen eines gemäß Anspruch 13 ausgebildeten Bodens, umfassend folgende Arbeitsschritte
a) Bereitstellen von mindestens zwei aus einem Blechmaterial geformten Decklagensegmenten(10,11,12), von Querträgerabschnitten (7,8,9) und mindestens einem Längsträger (13,14);
b) Vorfertigen von mindestens zwei Längssegmenten (2,3,4), indem jedes Längssegment (2,3,4) mindestens aus jeweils einem Decklagensegment (10,11,12) und Querträgerabschnitten (7,8,9) zusammengesetzt wird, indem die Querträgerabschnitte (7,8,9) am jeweils zugeordneten Decklagensegment (10,11,12) angeordnet und fest mit ihm verbunden werden;
c) Zusammenfügen der vorgefertigten Längssegmente (2,3,4) und des mindestens einen Längsträgers (13,14) derart, dass der Längsträger (13,14) zwischen den Längssegmenten (2,3,4) angeordnet ist und zwischen den aneinander liegenden Längssegmenten (2,3,4) eine Fügezone (G1,G2) ausgebildet ist;
d) Verbinden der Längssegmente (2,3,4) und des Längsträgers (13,14) in der Fügezone (G1,G2) miteinander.

15. Verfahren nach Anspruch 14, **dadurch**
**gekennzeichnet, dass** die Verbindung zwischen den Längssegmenten (2,3,4) und dem Längsträger (13,14) ausschließlich durch Schraubverbindungen oder als kaltgefügte Verbindungen hergestellt wird.

## Claims

1. Floor for a utility vehicle (Z), comprising a cover layer (D), on the upper face (O) of which there is a loading surface (F), on which an item of goods to be transported stands during use, and comprising a supporting structure supporting the cover layer (D), which structure is formed of at least one longitudinal support (13, 14) extending in the longitudinal direction (L) of the floor (1), and transverse supports (Q) which are oriented transversely thereto and are arranged so as to be distributed along the longitudinal support (13, 14), the transverse supports (Q) being composed of transverse support portions (7, 8, 9) which are supported on the longitudinal support (13, 14), the floor (1) being formed of at least two interconnected longitudinal segments (2, 3, 4), of which a first lateral longitudinal segment (2) is assigned to the one long side (L1) of the floor (1), and a second lateral longitudinal segment (3) is assigned to the other long side (L2) of the floor (1), **characterised in that**
- each longitudinal segment (2, 3, 4) respectively comprises a cover layer segment (10, 11, 12) formed from a sheet metal material, and transverse support portions (7, 8, 9) which support the respective cover layer segments (10, 11, 12), are arranged at a distance from one another in the longitudinal direction (L) and are rigidly connected to the cover layer segment (10, 11, 12), and
- **in that** the cover layer (D) of the floor (1) is composed of the cover layer segments (10, 11, 12).

2. Floor according to claim 1, **characterised in that** it comprises at least two longitudinal supports (13, 14) which are arranged at a distance from one another, and at least one middle longitudinal segment (4) which is arranged between the lateral longitudinal segments (2, 3) which are assigned to the long sides (L1, L2) of the floor (1), and which interconnects the longitudinal supports (13, 14) which are arranged adjacently to one another, and **in that** the middle longitudinal segment (4) likewise comprises a cover layer segment (12) which likewise forms a portion of the cover layer (D), and comprises transverse support portions (9) which are arranged at a distance from one another in the longitudinal direction (L) of the middle longitudinal segment (4) and which are rigidly connected to the cover layer segment (12) of the middle longitudinal segment (4) and support the cover layer segment (4) of the middle longitudinal segment.

3. Floor according to any of the preceding claims, **characterised in that** at least one of the lateral longitudinal segments (2, 3) includes one of the longitudinal supports (13, 14).

4. Floor according to claim 3, **characterised in that** the longitudinal support (13, 14) of the longitudinal segment (2, 3) including the longitudinal support (13, 14) comprises in each case an upper boom (28) which is assigned to the cover layer segment (10, 11) of said longitudinal segment (2, 3), and a web (27) supporting the upper boom (28), and **in that** the cover layer segment (10, 11) is located on the upper boom (28).

5. Floor according to claim 4, **characterised in that** the cover layer segment (10, 11) which is located on the upper boom (28) comprises a branch (26) which points towards the lower edge of the web (27) facing away from the upper boom (28).

6. Floor according to claim 2 and claim 5, **characterised in that** the branch (26) of the cover layer segment (10, 11) which is located on the upper boom (28) contacts the side of the web (27) or of the upper beam (28) of the respective longitudinal carriers (13, 14) which is assigned to each middle longitudinal segment (4), and **in that** the cover layer segment (12) of each middle longitudinal segment (4) abuts against the branch (26) of the cover layer segment (10, 11) of each lateral longitudinal segment (2, 3).

7. Floor according to any of the preceding claims, **characterised in that** in the case of two longitudinal segments (2, 3, 4), of which one is arranged on the one long side and the other is arranged on the other long side of the respectively assigned longitudinal support (13, 14), to each transverse support portion (7, 8, 9) of the one longitudinal segment (2 ,3, 4), a transverse support portion (7, 8, 9) of the other longitudinal segment (2, 3, 4) is assigned, and **in that** the transverse support portions (7, 8, 9) which are assigned to one another are connected to the longitudinal support (13, 14) opposite one another by means of at least one common connection element.

8. Floor according to any of the preceding claims, **characterised in that** in each case, at least one bead (17, 18, 19) extending in the longitudinal direction (L) of each longitudinal segment (2, 3, 4) is moulded into the cover layer segments (10, 11, 12) of the longitudinal segments (2, 3, 4), and **in that** the rigid connection between the cover layer segments (10, 11, 12) and the transverse supports (7, 8, 9), which support the cover layer segment (10, 11, 12) of each longitudinal segment (2, 3, 4), is formed in the beads (17, 18, 19).

9. Floor according to any of the preceding claims, **characterised in that** the cover layer segments (10, 11) of the lateral longitudinal segments (2, 3) each comprise, on the outer face thereof which is assigned to each long side (L1, L1) of the floor (1), a bending (35, 36) which points downwards, away from the loading surface (F) which is formed on the upper face (O) of the cover layer segments (10, 11).

10. Floor according to claim 9, **characterised in that**, on the end faces (5, 6) thereof, in each case a strip portion (37) forming the end-face end of the floor (1) is provided, and **in that** the strip portion (37) is supported on the assigned bending (35, 36) by means of a corner reinforcement (38), which is placed in the corner region which is defined by each strip portion (37) and the bending (33, 36) which adjoins said portion.

11. Floor according to any of the preceding claims, **characterised in that** at least the cover layer segments (10, 11, 12), the transverse support portions (7, 8, 9) and the longitudinal supports (13, 14) of the longitudinal segments (2, 3, 4) consist of a metal material.

12. Floor according to any of the preceding claims, **characterised in that** the connections between the cover layer segments (10, 11, 12) and the transverse support portions (7, 8, 9) and longitudinal supports (13, 14) which are respectively assigned thereto, as well as the connections of the transverse support portions (7, 8, 9) to one another and to the respectively assigned longitudinal supports (13, 14) are each produced exclusively in the form of screw connections or as cold-joined connections.

13. Floor according to any of the preceding claims, **characterised in that** the longitudinal segments (2, 3, 4) are prefabricated separately from one another and are interconnected after the prefabrication so that in each case, a joining zone (G1, G2) is formed between adjacently arranged longitudinal segments (2, 3, 4), in which zone the longitudinal segments (2, 3, 4) are rigidly interconnected.

14. Method for producing a floor which is formed according to claim 13, comprising the following production steps:
a) providing at least two cover layer segments (10, 11, 12) which are formed from a sheet metal material, transverse support portions (7, 8, 9) and at least one longitudinal support (13, 14);
b) prefabricating at least two longitudinal segments (2, 3, 4), in which each longitudinal segment (2, 3, 4) is composed at least of one cover layer segment (10, 11, 12) in each case and transverse support portions (7, 8, 9), in which the transverse support portions (7, 8, 9) are arranged on the respectively assigned cover layer segment (10, 11, 12) and are rigidly connected thereto;
c) assembling the prefabricated longitudinal segments (2, 3, 4) and the at least one longitudinal support (13, 14) in such a way that the longitudinal support (13, 14) is arranged between the longitudinal segments (2, 3, 4), and a joining zone (G1, G2) is formed between the adjoining longitudinal segments (2, 3, 4) ;
d) connecting the longitudinal segments (2, 3, 4) and the longitudinal support (13, 14) to one another in the joining zone (G1, G2).

15. Method according to claim 14, **characterised in that** the connection between the longitudinal segments (2, 3, 4) and the longitudinal support (13, 14) is produced exclusively by screw connections or as cold-joined connections.

## Revendications

1. Plancher pour un véhicule utilitaire (Z), avec une couche de revêtement (D), sur la face supérieure (O) de laquelle se trouve une surface (F) sur laquelle sont posés des biens à transporter, et avec une structure porteuse supportant la couche de revêtement (D), ladite structure porteuse étant constituée d'au moins un longeron (13, 14) s'étendant dans le sens longitudinal (L) du plancher (1) et de traverses (Q) disposées perpendiculairement et réparties le long de ce ou ces longerons (13, 14), les traverses (Q) étant composées de sections de traverses (7, 8, 9) s'appuyant sur le longeron (13, 14), étant entendu que le plancher (1) est composé d'au moins deux segments longitudinaux (2, 3, 4), un premier segment longitudinal latéral (2) étant connecté à un côté longitudinal (L1) du plancher (1) et un deuxième segment longitudinal latéral (3) étant connecté à l'autre côté longitudinal (12) du plancher (1), **caractérisé en ce que**
- chaque segment longitudinal (2, 3, 4) comporte un segment de couche de revêtement (10, 11, 12) formé en matériau de tôle et des sections de traverses (7, 8, 9) supportant les segments de couche de revêtement correspondants (10, 11, 12), disposés de façon espacée l'un de l'autre dans le sens longitudinal (L), et fermement reliés au segment de couche de revêtement (10, 11, 12), et **en ce que**
- la couche de revêtement (D) du plancher (1) est composée des segments de couches de revêtement (10, 11, 12).

2. Plancher selon la revendication 1, **caractérisé en ce qu'**il comporte au moins deux longerons (13, 14) disposés de façon espacée l'un par rapport à l'autre, et au moins un segment longitudinal médian (4), disposé entre les segments longitudinaux latéraux (2, 3) ordonnés selon les côtés longitudinaux (L1, L2) du plancher (1), et qui relie entre eux les longerons (13, 14) disposés dans le voisinage l'un de l'autre, et **en ce que** le segment longitudinal médian (4) comporte également un segment de couche de revêtement (12), lequel forme également une section de la couche de revêtement (D), de même que des sections de traverses (9) disposées de façon espacée dans la direction longitudinale (L) du segment longitudinal médian (4), et sont reliés de façon fixe au segment de couche de revêtement (12) du segment longitudinal médian(4) et de plus, supportent le segment de couche de revêtement (4) du segment longitudinal médian.

3. Plancher selon l'une quelconque des revendications précédentes, **caractérisé en ce qu'**au moins un des segments longitudinaux latéraux (2, 3) est constitué d'un des longerons (13, 14).

4. Plancher selon la revendication 3, **caractérisé en ce que** chaque longeron (13, 14) du segment longitudinal (2, 3) constituant le longeron (13, 14) présente une semelle supérieure (28) faisant face au segment de couche de revêtement (10, 11) de ce segment longitudinal (2, 3), ainsi qu'un flanc (27) porteur de la semelle supérieure, et **en ce que** le segment de couche de revêtement (10, 11) repose sur la semelle supérieure (28).

5. Plancher selon la revendication 4, **caractérisé en ce que** le segment de couche de revêtement (10, 11) reposant sur semelle supérieure (28) comporte un côté (26) pointant dans la direction du bord inférieur du flanc (27) opposé à la semelle supérieure (28).

6. Plancher selon les revendications 2 et 5, **caractérisé en ce que** le côté (26) du segment de revêtement (10, 11) reposant sur la semelle supérieure (28) s'appuie sur la face du flanc (27) appartenant au segment longitudinal médian (4) correspondant, ou sur la face de la semelle supérieure (28) du longeron (13, 14) correspondant, et **en ce que** chaque segment longitudinal médian (4) rejoint le côté (26) du segment de couche de revêtement (10, 11) du segment longitudinal latéral (2, 3) correspondant, au moins par son segment de couche de revêtement (12).

7. Plancher selon l'une quelconque des revendications précédentes, **caractérisé en ce que**, en se référant à deux segments longitudinaux (2, 3, 4), dont l'un est disposé face à l'une des faces longitudinales du longeron (13, 14) lui faisant face, et l'autre, disposé face à l'autre face, à chaque section de traverse (7, 8, 9) d'un segment longitudinal (2, 3, 4) donné, est reliée une section de traverses (7, 8, 9) de l'autre segment longitudinal (2, 3, 4), et **en ce que** les sections de traverses (7, 8, 9) se faisant face l'une à l'autre, sont alignées avec le longeron (13, 14), sur les côtés mutuellement opposés, au moyen d'au moins un élément de jonction commun.

8. Plancher selon l'une quelconque des revendications précédentes, **caractérisé en ce qu'**au moins une moulure (17, 18, 19) est formée dans les segments de revêtement (10, 11, 12) des segments longitudinaux (2, 3, 4), s'étendant dans la direction longitudinale (L) du segment longitudinal correspondant (2, 3, 4), et **en ce que** la jonction forte entre les segments de revêtement (10, 11, 12) et les traverses (7, 8, 9), qui portent le segment de couche de revêtement (10, 11, 12) du segment longitudinal correspondant (2, 3, 4), est réalisée dans les moulures (17, 18, 19).

9. Plancher selon l'une quelconque des revendications précédentes, **caractérisé en ce que** les segments de couche de revêtement (10, 11) des segments longitudinaux latéraux (2, 3) comportent, sur la face externe de ceux-ci, tournée vers les côtés longitudinaux respectifs du plancher (1), un coude dirigé vers le bas (35, 36) s'étendant à partir d'une plateforme de chargement (F) formée sur la face supérieure (O) des segments de revêtement (10, 11).

10. Plancher selon la revendication 9, **caractérisé en ce que**, sur les parties frontales (5, 6) de celui-ci, est prévue une section de bandes (37) formant l'extrémité frontale du plancher (1), et **en ce que** la section de bandes (37) s'appuie sur la partie coudée (35, 36) lui faisant face, au moyen d'un coin renforcé (38), placé à l'angle délimité par la section de bande (37) correspondante et la partie coudée (33, 36) adjacente.

11. Plancher selon l'une quelconque des revendications précédentes, **caractérisé en ce qu'**au moins les segments de couche de revêtement (10, 11, 12), les sections de traverses (7, 8, 9) et les longerons (13, 14) des segments longitudinaux (2, 3, 4) sont constitués d'une matière métallique.

12. Plancher selon l'une quelconque des revendications précédentes, **caractérisé en ce que** les connexions entre les segments de couche de revêtements (10, 11, 12) et les sections de traverses (7, 8, 9) et longerons (13, 14) qui leur sont chaque fois reliés, ainsi que les connexions des sections de traverses (7, 8, 9) entre elles et avec les longerons (13, 14) qui leur sont respectivement reliés, sont réalisées exclusivement par des raccords à vis ou des connexions à froid.

13. Plancher selon l'une quelconque des revendications précédentes, **caractérisé en ce que** les segments longitudinaux (2, 3, 4) sont préfabriqués séparément les uns des autres et reliés les uns aux autres après la préfabrication, de manière telle qu'entre les segments longitudinaux (2, 3, 4) voisins soit réalisée une zone de jonction (G1, G2), dans laquelle les segments longitudinaux (2, 3, 4) sont fixés les uns aux autres.

14. Procédé de fabrication d'un plancher réalisé selon la revendication 13, qui comprend les étapes de travail suivantes :
a) L'obtention d'au moins deux segments de couche de revêtement (10, 11, 12) formés d'un matériau en tôle, de sections de traverses (7, 8, 9) et d'au moins un longeron (13, 14) ;
b) La préfabrication d'au moins deux segments longitudinaux (2, 3, 4), chaque segment longitudinal (2, 3, 4) étant composé d'au moins un segment de couche de revêtement (10, 11, 12) et de sections de traverse (7, 8, 9), étant entendu que les sections de traverse (7, 8, 9) sont elles-mêmes reliées au segment de couche de revêtement (10, 11, 12) face auquel elles sont disposées ;
c) L'assemblage des segments longitudinaux (2, 3, 4) préfabriqués et d'au moins un longeron (13, 14), de telle manière que le longeron (13, 14) soit connecté entre les segments longitudinaux (2, 3, 4) et que soit réalisée une zone de jonction (G1, G2) entre les segments longitudinaux (2, 3, 4) disposés les uns à côté des autres ;
d) La connexion des segments longitudinaux (2, 3, 4) et du longeron (13, 14) l'un à l'autre dans la zone de jonction (G1, G2).

15. Procédé selon la revendication 14, **caractérisé en ce que** la connexion entre les segments longitudinaux (2, 3, 4) et le longeron (13, 14) est exclusivement réalisée par des raccords à vis ou des connexions à froid.
